# EUROPEAN PATENT APPLICATION

(11) **EP 1 752 866 A2**
(43) Date of publication of application: **14.02.2007**
(21) Application number: 06117999.0
(22) Date of filing: 27.07.2006
(51) Int. Cl.: G06F 3/033

(54) **Slidable input device and portable apparatus including the same**

(30) Priority: 12.08.2005 KR 20050074414
(71) Applicant: Samsung Electronics Co., Ltd., Suwon-si 442-742 Gyeonggi-Do (KR)
(72) Inventor: Park, Sang-hyun, Seoul (KR); Ok, Joon-ho, Seoul (KR); Rhee, Young-ho, Seoul (KR); Cho, Soo-ho, Seoul (KR)
(74) Representative: Robinson, Ian Michael

(57) **Abstract**

A slidable input device and a portable apparatus including the same, in which objects arranged in three-dimension or the size of a specific object can be easily manipulated and controlled. The portable apparatus includes an input unit (10) for generating a key-selection signal corresponding to up, down, right or left directions selected by a user and a movement signal corresponding to a direction to which the input unit (10) is moved by the user through an external force; a signal input unit (10) for receiving the key selection signal and the movement signal generated by the input unit (10); a control unit (160) for carrying out a predetermined operation indicated by the key selection signal and the movement signal inputted by the signal input unit (10); and a display unit (20) for displaying the object according to the predetermined operation on a screen.

## Description

The present invention relates to a slidable input device and a portable apparatus including the same and, more particularly to a slidable input device by which objects arranged in three dimensions or the size of a specific object can be easily manipulated and controlled, and a portable apparatus including the input device.

The term "portable terminal" generally refers to portable apparatuses such as cellular phones, wireless phones (including CT 2s), car phones, etc., that communicate with base stations or fixed apparatuses (in the case of wireless phones) using radio frequencies.

Portable terminals are widely used by consumers in diverse aspects of daily lives. As such, it is important to provide portable terminals having displays with user-friendly menus associated with their functions. Conventionally, each menu (sub-menu) is displayed as a two-dimensional (2D) image, it thus occupies a large portion of memory capacity, and in almost all cases, a user must return to main menu or upper menu to change the menu, which requires cumbersome repeated operations.

Specifically, because menus are typically structured in a complicated manner in conventional phone menu systems, a considerable memory capacity is required in portable terminals. Further, since buttons provided in portable terminals must be manipulated multiple times to change the menu, and because new menus are loaded very slowly, it is often inconvenient for users to operate the menu provided in portable terminals.

In order to provide a faster and easier way of using the menu in portable terminals, methods for structuring menus more efficiently in the limited display space in portable terminals have been suggested.

A three dimensional image has been proposed as one of efficient graphical user interface (GUI) structuring methods for displaying various functions on a small display screen of a portable terminal.

According to the above 3D GUI structuring method, the movement of a four-direction key is limited to X-and Y-axes. In addition, a separate hardware key is needed to manipulate the 3D image. Here, since the four-direction key is moved only in X-and Y-axes and a separate hardware key is used manipulate movements in Z-axis, a user has to operate two different keys for moving in all X-, Y-and Z-axes, which is inconvenient for most users.

Thus, the method does not fully utilize the advantages of 3D user interface and falls short of providing users with an easier way of operating menus in portable terminals.

To manipulate in 3D user interface, a new technology for moving all directions in X-, Y-and Z-axes with a single key has been suggested.

Korean Unexamined Patent Publication No. 2004-74456 "Three-Dimensional Menu System For Cellular Phone" discloses a three-dimensional menu system for a cellular phone, in which menus of a cellular phone are three-dimensionally structured to simultaneously display different menus on a screen provided in the phone. Although, the disclosed system relates to providing a convenient way of operating menus in cellular phones with 3D user interface, it does not provide an input means and an input method for manipulating and selecting menus provided in a 3D user interface.

According to the present invention there is provided an apparatus and method as set forth in the appended claims. Preferred features of the invention will be apparent from the dependent claims, and the description which follows.

The present invention provides a slidable input device and portable apparatus including the same which enables a user to easily operate and select a 3D image displayed on the display screen of a portable terminal by using a slidable input device.

The present invention also provides a slidable input device to control the size of an image displayed on the display screen of a portable apparatus.

According to an aspect of the present invention, there is provided an input device according to an embodiment of the present invention, which includes a direction key for moving an object image in up, down, right or left directions selected by a user and in a direction indicated from an external force applied thereto by the user, a sliding unit for moving the direction key to one of two directions, and a returning means for returning the direction key to its initial position through a repulsive force.

According to another aspect of the present invention, there is provided a portable apparatus which includes an input unit that generates a key-selection signal corresponding to up, down, right or left directions as selected by a user, and generates a movement signal corresponding to a direction to which the input unit is moved by the user through an external force; a signal input unit that receives the key selection signal and the movement signal generated by the input unit; control unit that carries out an operation indicated by the key selection signal and the movement signal inputted by the signal input unit; and a display unit that displays the object according to the operation indicated by the key selection signal and the movement signal on a screen.

According to a further aspect of the present invention, there is provided a portable apparatus which includes an input unit that generates a key signal corresponding up, down, right or left directions, or generates a movement signal corresponding to a specified direction, to select and control a desired object, and a display screen that displays the object according to the signals generated by the input unit.

The above and/or other aspects of the present invention will be more apparent from the following detailed description of exemplary embodiments taken in conjunction with the accompanying drawings, in which:
Figure 1 illustrates a portable apparatus including a slidable input device according to an exemplary embodiment of the present invention;
Figure 2 is a block diagram illustrating a portable apparatus including a slidable input device according to an exemplary embodiment of the present invention;
Figures 3A and 3B illustrate tables for storing operating commands corresponding to each key selected by a direction key and each moving direction, in a memory of a portable apparatus including a slidable input device according to an exemplary embodiment of the present invention;
Figure 4 is an exploded diagram illustrating a slidable input device according to an exemplary embodiment of the present invention;
Figure 5 illustrates an example of controlling objects arranged in three-dimension by using a slidable input device according to an exemplary embodiment of the present invention;
Figures 6A and 6B illustrate examples of controlling the size of a displayed object by a slidable input device according to an exemplary embodiment of the present invention; and
Figures 7A and 7B illustrates directions to which a slidable input device is moved according to an exemplary embodiment of the present invention.

The present invention may by understood more readily by reference to the following detailed description of the exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

Hereinafter, the aspects of the present invention will be more apparent by describing in detail exemplary embodiments thereof with reference to the attached block diagrams or flow charts illustrating a slidable input device and a portable apparatus including the input device of the present invention. It is definitely understood that combinations of each block of the flow chart and flow charts are performed by computer program instructions. These computer program instructions can be loaded in general purpose computer, specific computer or processor of programmable data processing equipment. That is, these instructions carried out through computer or processor of programmable data processing equipment can provide a method for performing the functions illustrated in blocks of flow charts. These computer program instructions can also be stored in computer or other programmable data processing equipment-oriented computer usable or computer readable memory to carry out functions in a specific way. Thus, these instructions stored in computer-usable or computer-readable memory can produce items including instruction methods carrying out functions illustrated in blocks of flow charts. Since these instructions can be loaded on computer or other programmable data processing equipment, a series of actions are performed in the computer or other programmable data processing equipment to produce processes executed by a computer, by which these instructions can provide steps to accomplish functions illustrated in each block of flow chart.

Each block might represent a module, segment or part of code containing one or more practicable instructions for carrying out the specific logical functions. It is also noticeable in some alternative examples that the functions illustrated in blocks can be completed in different order. For example, the functions of two consecutive blocks can be carried out simultaneously or functions of blocks might be completed in reverse order.

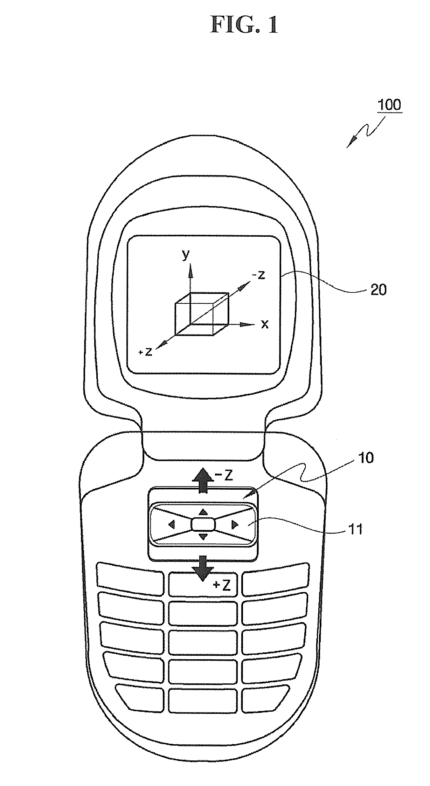

Figure 1 illustrates a portable apparatus including a slidable input device according to an exemplary embodiment of the present invention.

As illustrated, a portable apparatus 100 includes an input device 10 and a display screen 20. Here, the portable apparatus 100 refers to a mobile apparatus having a capability of processing information, such as a cellular phone, a PDA (personal digital assistants), and others.

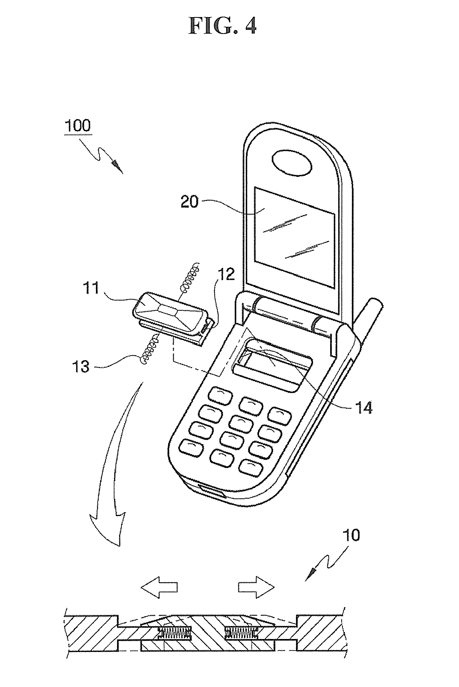

The input device 10 generates a key selection signal corresponding to selected up, down, right or left directions or a movement signal corresponding to a specified direction, in order to select and control a desired object displayed on the display screen 20. The input device 10 is composed of a direction key 11, a sliding unit 12 (shown in detail in Figure 4) and a returning means 13 (also shown in detail in Figure 4).

The direction key 11 of the input device 10 is a four-direction key that enables up, down, right or left directions to be selected, and it may be slid in the vertical direction (i.e., up and down), or, the horizontal direction (i.e., left and right) via the sliding unit 12. When the direction key 11 is moved to a specified direction, it can select and control a desired object in the Z-direction from objects arranged in three-dimension on the display screen 20, and can also control the size of the image displayed on the display screen 20. The input device 10 will be described later in more detail with reference to Figure 4.

For example, a user can select an object arranged in three-dimension from the display screen 20 or can move the object in a different position by moving the direction key 11 up, down, rightward or leftward directions. Here, the term 'object' may refer to one of a command, action, program, data or image in order to carry out an operation determined by the selected movement of the direction key 11.

The user can also move a focus to an object positioned in the Z-direction among the three-dimensionally arranged objects, by moving the direction key 11 to the direction of the object (by sliding the direction key 11 in up or down directions). That is, a user can select an object in the Z-direction.

The user can zoom in or out from an object displayed on the display screen 20 by sliding the direction key 11 in the vertical direction.

The display screen 20 displays objects according to signals generated by the input device 10. On the display screen 20, respective objects selected by the user through a key selection and a key movement are displayed, or the selected object is zoomed out or in.

On the display screen 20, vertical directions represent the Y-axis and horizontal directions represent the X-axis. A direction perpendicular to a plane formed by X-and Y-axes represents the Z-axis.

In order to select an object from the objects displayed in 3D on the display screen 20, the user moves a direction key 11 of the input device 10 or selects a key for a specific direction. Then, an object is selected according to the direction to which the direction key 11 is moved or a key for the selected direction is displayed.

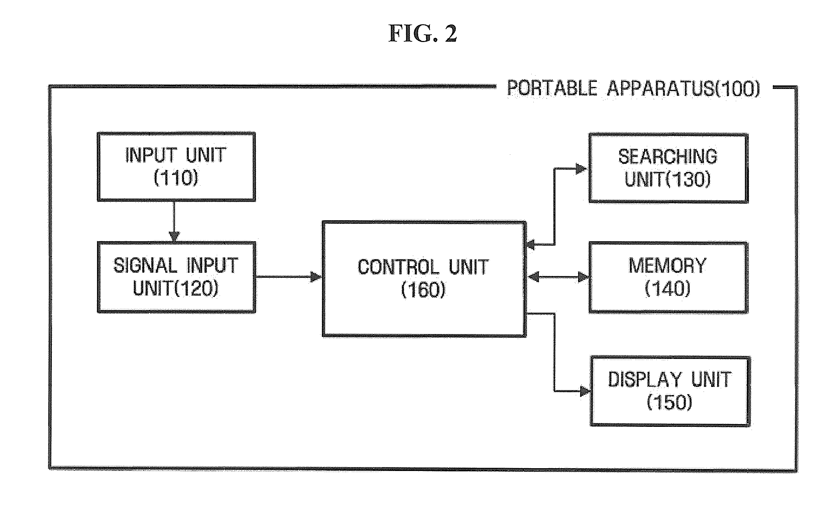

Figure 2 is a block diagram illustrating a portable apparatus including a slidable input device according to an exemplary embodiment of the present invention.

As illustrated, the portable apparatus 100 includes an input unit 110, a signal input unit 120, a searching unit 130, a memory 140, a display unit 150 and a control unit 160.

The term '-unit' used in the exemplary embodiments of the present invention indicates a component of software or hardware such as a Field Programmable Gate Array (FPGA) or an Application-Specific Integrated Circuit (ASIC), which performs certain tasks therein. However, the term '-unit' is not limited to components of software or hardware, and might be a component of addressable storage medium and may be configured to be executed on one or more processors. Therefore, the term '-unit' may include, by way of example, components such as software components, object-oriented software components, class components and task components, processes, functions, attributes, procedures, sub-routines, segments of program code, drivers, firmware, microcode, circuit, data, database, data structures, tables, arrays, and variables. The functions provided by components and '-unit' can be combined with or divided into subcomponents and '-unit's. In addition, components and '-unit's can be embodied to operate one or more CPUs in a device or a security multimedia card.

The input unit 110 generates a key selection signal corresponding to up, down, right or left directions selected by the user and a movement signal corresponding to a direction to which the input unit 110 is moved by a user. Here, the input unit 110 refers to the direction key 11 for moving in up, down, right and left directions, and the direction key 11 can be forcibly moved by the user to any of the directions through sliding unit. The direction key 11 can be moved vertically or horizontally by the user in a convenient manner, but the key movement is not limited thereto.

When the direction key 11 is moved by the user, the key is automatically returned to its initial position by a repulsive force provided by a returning means.

The signal input unit 120 receives a key selection signal and a movement signal generated by the input unit 110. The key selection signal is generated when one direction from up, down, right and left directions is selected on the four direction key 11, and the movement signal is generated when the input unit 110 is moved by the user in a certain direction (for example, up, down, right, or left directions).

The signal input unit 120 receives not only the key selection signal generated by the input unit 110 but also key signals generated by various numeric keys and specific function keys, and then outputs them to the control unit 160.

The searching unit 130 searches a key code value and a movement code value, respectively corresponding to the key selection signal and the movement signal output by the signal input unit 120, in the memory 140, and then transmits operation commands corresponding to the searched code values to the control unit 160.

The memory 140 stores key code values and moving code values corresponding to the key selection signals and the movement signals generated by the input unit 110, along with operating commands assigned to them. The memory 140 provides code values, respectively corresponding to the key selection signal and the movement signal, and corresponding operation commands to the searching unit 130.

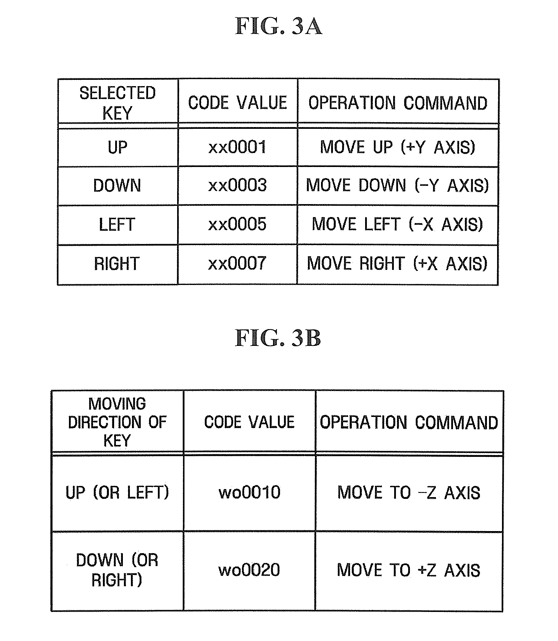

As illustrated in Figure 3A, the memory 140 stores code values corresponding to directions selected by the direction key 11 and operating commands assigned to the code values, in the form of a table. As illustrated in Figure 3B, the memory 140 also stores code values corresponding to the moving direction of the direction key 11 moved by the user and operating commands assigned to the codes, in the form of a table.

For example, when the selected direction key 11 is operated in the right direction, the corresponding code value is xx0007, and the assigned operating command is "moving to (+)X-axis".

When the direction key 11 is slid in the up direction, the corresponding code value is wo0010 and the assigned operation command is "moving to (-)Z-axis".

The memory 140 is composed of a program memory storing program data necessary for controlling operations of the portable apparatus 100 and a data memory storing command data created by the user during the operation.

According to an exemplary embodiment of the present invention, the memory 140 includes an EEPROM (electrically erasable and programmable read-only memory), a flash ROM (read-only memory), and a RAM (random access memory). In the EEPROM, variables necessary for executing various programs are stored. In the RAM, various command data necessary for controlling the portable apparatus 100 are stored, and, in the flash ROM, operating programs, application programs and communication protocols are stored.

The display unit 150 displays an object according to the operation command of the control unit 160. The display unit 150 displays objects arranged in one dimension, two dimensions or three dimensions.

The control unit 160 controls general operations of the portable apparatus 100. When the key selection signal and the movement signal generated by the input unit 110 are input via the signal input unit 120, the control unit 160 transmits the signals input from the signal input unit 120 to the searching unit 130 and controls the searching unit 130 so as to find code values corresponding to the signals.

The control unit 160 also carries out an operation command assigned to the code value searched by the searching unit 130, to thereby allow the object displayed on the screen to be focused, or zoomed in or out. Then, the control unit displays the focused object or the zoomed in or out object on the display screen through the display unit 150.

When objects arranged three dimensionally are displayed on the screen of the portable apparatus 100, and the user operates the input unit 110 in upward direction to generate an "UP" movement signal (at this time, an object from those arranged three dimensionally is focused to indicate the current position), the signal input unit 120 receives a movement signal corresponding to upward movement via the input device 10, and then sends the "UP" movement signal to the control unit 160.

Then, the control unit 160 sends the "UP" movement signal to the searching unit 130, and the searching unit 130 searches for a key code value corresponding to the "UP" movement signal, in the storing unit 140.

After a key code corresponding to the "UP" movement signal and an operation command to the key code value indicating "moving toward (-)Z-axis" have been found, the searching unit 130 transmits the searched operation command, that is, "moving toward (-)Z-axis", to the control unit 160.

The control unit 160 then moves the focus away from the initially focused object from those arranged three dimensionally on the display screen of the portable apparatus 100 toward (-)Z-axis.

The portable apparatus 100 additionally includes a wireless unit and an audio processing unit (not shown). The wireless unit controls transmission/receiving of audio data and control data according to the control by the control unit 160. The audio processing unit converts audio data transmitted from the wireless unit into audible sound through a speaker (SPK), and also processes audio signals transmitted from a microphone (MIC) into data and outputs it to the wireless unit, according to the control by the control unit 160.

Figure 4 is an exploded diagram of a slidable input device according to an exemplary embodiment of the present invention

As illustrated, the input device 10 includes a direction key 11, a sliding unit 12 and a returning means 13.

The direction key 11 generates a key selection signal when operated in up, down, right or left directions and a movement signal indicating a direction to which it is operated by a user. The direction key 11 can move the focus to one of the four different directions (that is, (+)X-axis, (-)X-axis, (+) Y-axis, and (-)Y-axis) . The direction key itself can be moved to a specified direction to change the focus to the (+)Z-axis or the (-)Z-axis.

The sliding unit 12 is positioned at both sides of the direction key 11, preferably right and left sides, thereby enabling the direction key 11 to be moved. That is, the direction key 11 is slid toward a specified direction by the sliding unit 12.

The returning means 13 is also positioned at both sides of the direction key 11, preferably in the middle of upper and lower sides), thereby enabling the direction key 11 to be returned to the initial position by a repulsive force when the direction key 11 has been moved by the user. Here, the returning means 13 can be a spring or an elastic object (or means).

One end of the returning means 13 is fixed to the direction key 11 and the other end is fixed to the portable apparatus 100, to thereby prevent the key from being detached by the repulsive force of the returning means 13.

As illustrated, the sliding unit 12 formed on both sides of the direction key 11 slides in a guide groove 14 of the portable apparatus 100, to thereby allow the direction key 11 to slide in a specified direction. The returning means 13 provided in the center of the upper and lower sides of the direction key 11 automatically returns the direction key 11 to the initial position through the repulsive force.

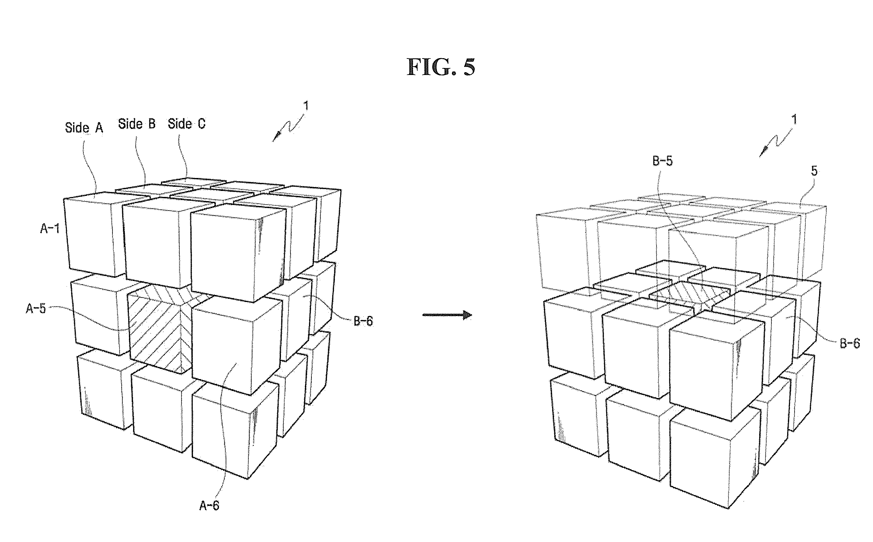

Figure 5 illustrates an example of controlling objects arranged in three-dimension by using a slidable input device according to an exemplary embodiment of the present invention

As illustrated, objects are arranged in three dimensionally to form a cube are displayed on the display screen 20, and various polyhedrons can be formed according to the number of objects. It may be understood that each object refers to an icon indicating a specific command.

It is assumed that a first side is referred to as A, a second side is as B, and a third side is as C, and, and 9 alpha-numeric characters (A-1 to A-9) are sequentially allotted to 9 objects on Side A. Likewise, alpha-numeric characters B-1 to B-9 and C-1 to C-9 are allotted to Side B and Side C, respectively.

Among objects 1 displayed on the display screen 20 of the portable apparatus 100, objects denoted by A-1 to A-9 on Side A can be selected and moved in four directions by the direction key 11, but objects on Sides B and C cannot be selected or moved in four directions by the direction key 11.

When a focus is positioned on an object A-5 from the objects 1 displayed on the display screen 20 of the portable apparatus 100, and the user desires to move the focus to an object B-5, the user moves the direction key 11 toward (-)Z-axis (for example, "up"), so that the focus is moved to Side B behind Side A, thereby focusing the object B-5. Then, the direction key 11 moved by the user automatically returns to the initial position by the returning means 13.

When the focus is moved from Side A to Side B, objects on Side B may be covered by Side A. According to an exemplary embodiment of the present invention, objects positioned in front of or over the focused object are transparently processed and displayed, in order to prevent a side or a specific object on which the focus is positioned from being covered by Side A. It is likewise for Side B and Side C.

When the user desires to move the focus to an object B-6 when the current focus is positioned on the object A-5, the user moves the direction key 11 toward (-)Z-axis (e.g., "up"), positions the focus on an object B-5, and then operates the direction key 11 in the right direction to move the focus to the object B-6.

Accordingly, to move the focus to Side A, Side B and Side C, the direction key 11 is move to (+)Z-axis or the (-)Z-axis. To select a specific object under the condition that the focus has been moved, any direction in the direction key 11 can be selected and the focus can be freely moved to a desired side (that is, Sides A, B or C). Accordingly, the user can freely move the focus to X-, Y- or Z-axes through the input device 10.

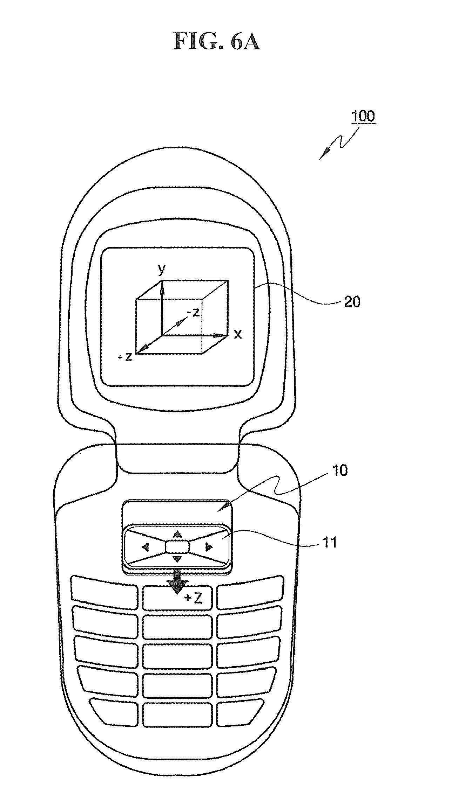

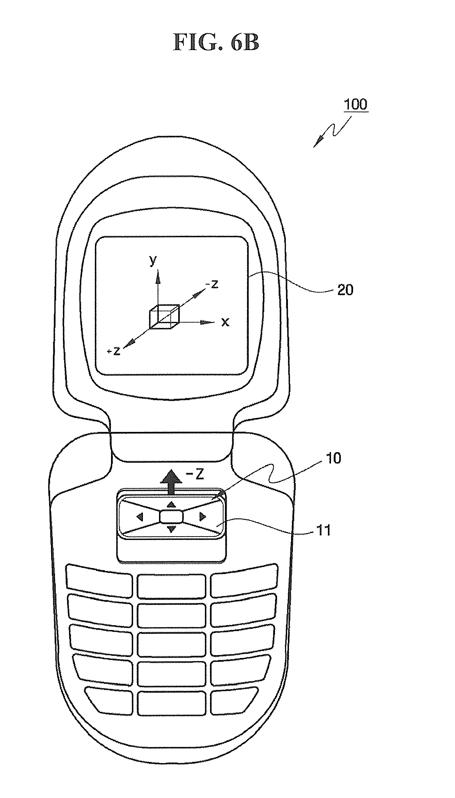

Figures 6A and 6B illustrate examples of controlling the size of an object displayed on the screen, using a slidable input device according to an exemplary embodiment of the present invention. Figure 6A illustrates zooming in the object, and Figure 6B illustrates zooming out the object.

When the user desires to control the size of an object (e.g., an image) provided on the display screen 20, the user moves the direction key 11 of the input device 10 in a specified direction, by which the object becomes zoomed in or out.

For example, if the user moves the direction key 11 down, (+)Z-axis, the image is zoomed in. On the contrary, if the user moves the direction key 11 up, (-) Z-axis, the image is zoomed out. Here, after the direction key 11 is moved in a specified direction by the user, it returns to the initial position by the returning means 13.

According to the number of times the direction key 11 is repeatedly operated in the same specified direction, the magnitude of zoom-in or zoom-out processes can be controlled.

For example, when the user moves up the direction key 11 once, the image is zoomed in by 50%. When the user moves up the direction key 11 twice, the image is zoomed in by 75%. At this time, the amount of image zoomed-in or zoomed-out in each graduated level may be selectively determined by the user or may be provided in the control unit 160 of the portable apparatus 100.

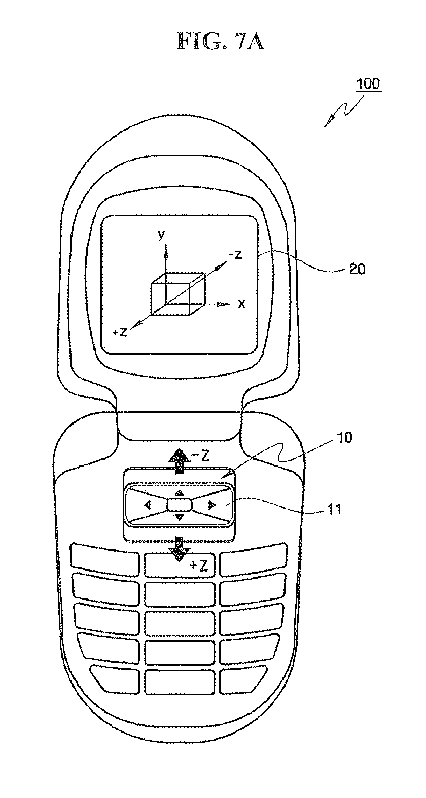

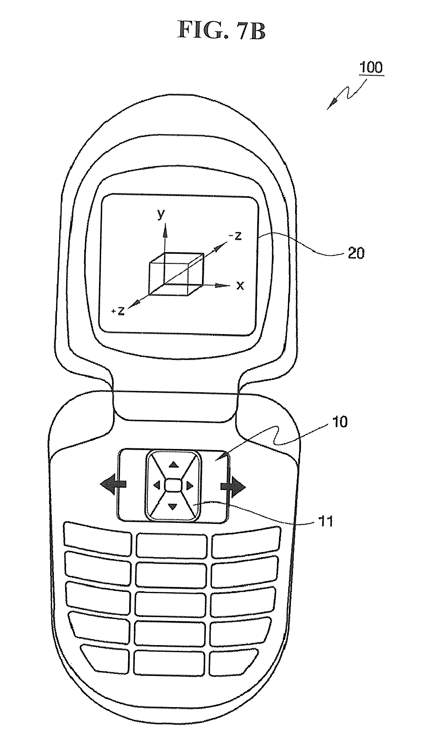

Figures 7A and 7B illustrate directions in which a slidable input device is moved according to an exemplary embodiment of the present invention.

Figure 7A illustrates vertical movement of the direction key 11 of the input device 10, and Figure 7B illustrates horizontal movement of the direction key 11 of the input device 10.

As illustrated in Figure 7A, the user moves the direction key 11 vertically in order to move to the Z-axis. To zoom in or out the image provided in the display screen 20, the user again moves the direction key 11 vertically. As illustrated in Figure 7B, the user moves the direction key 11 horizontally in order to move to the Z-axis. To zoom in or out the image provided in the display screen 20, the user again moves the direction key 11 horizontally. Therefore, the user can easily select or move a desired object from those arranged in three dimensionally using the input device 10.

In addition, the user can conveniently zoom-in or-out an image file displayed on the display screen using the input device 10.

As described above, a slidable input device and a portable apparatus employing the same according to an exemplary embodiment of the present invention may have at least one or more effects set forth below.

First, an object in three dimensionally displayed on the screen can be selected or a focus can be moved to a specific object in a convenient manner, using the slidable input device, thereby providing a user with convenient operation.

Second, a specific object (i.e., image) displayed on the screen can be zoomed-in or-out using the slidable input device, thereby the size of a displayed object can be easily controlled or adjusted without using a separate or additional function key.

Third, a method of more efficiently operating conventional 3D-type GUIs is provided, thus the advantages provided by 3D-type GUIs can be realized.

Fourth, since objects arranged in Z-axis can be easily controlled, the small display screen provided in portable apparatuses can be more efficiently utilized.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An input device (10) comprising:
a direction key (11) which is operable to move an object image which is displayed on a display screen (20), in at least one of a horizontal direction and a vertical direction;
a sliding unit (12) which slidably moves the direction key (11) in at least one of vertically and horizontally in response to an external force to cause the object image to move in one of a first direction and a second direction which are different than the horizontal direction and the vertical direction; and
a returning unit (13) which returns the direction key (11) to its initial position through a returning force.

2. The input device (10) of claim 1, wherein if the direction key (11) is slidably moved in a first horizontal or vertical direction, the object image is moved in the first direction which is normal to a plane formed by a vertical axis and a horizontal axis of the object, and if the direction key (11) is slidably moved in a second horizontal or vertical direction opposite to the first horizontal or vertical direction, the object image is moved in the second direction, which is opposite to the third direction and is normal to the plane formed by the vertical axis and horizontal axis.

3. The input device (10) of claim 1 or 2, wherein if the direction key (11) is slidably moved horizontally or vertically, the object image is zoomed in or zoomed out.

4. An apparatus comprising:
an input unit (10) which generates a key selection signal corresponding to one of a horizontal direction and a vertical direction, and generates a movement signal corresponding to one of a first direction and a second direction in which the input unit (10) is moved by an external force; and
a control unit (160) which performs an operation based on the key selection signal and the movement signal generated by the input unit (10); and
a display unit (20) which displays an object according to the operation performed by the control unit (160).

5. The apparatus of claim 4 further comprising:
a searching unit (130) which searches a key code value and a movement code value respectively corresponding to the key selection signal, and the movement signal generated by the input unit (10); and
a memory (140) which stores the key code value and the moving code value corresponding to the key selection signal and the movement signal generated by the (10), together with operation commands assigned to the key code value and the moving code value.

6. The apparatus of claim 4 or 5, wherein if the input unit (10) is moved in the first direction, a movement signal corresponding to movement of the object in a third direction, which is normal to a plane formed by a vertical axis and a horizontal axis of the object, is generated, and if the input unit (10) is moved in the second direction, which is opposite to the first direction, a movement signal corresponding to movement of the object in a fourth direction, which is normal to the plane formed by the vertical axis and the horizontal axis of the object and is opposite to the third direction, is generated.

7. The apparatus of claim 4, 5 or 6, wherein a zoom-in key signal is generated if the input unit (10) is moved in the first direction, and a zoom-out key signal is generated if the input unit (10) is moved in the second direction which is opposite to the first direction.

8. The apparatus of claim 4, 5, 6 or 7, wherein the input unit (10) returns to an initial position, after having been moved to one of the first and second positions, through a repulsive force.

9. An apparatus comprising:
an input unit (10) which generates a key selection signal corresponding to one of a horizontal direction and a vertical direction, or generates a movement signal corresponding to one of a first direction and a second direction in which the input unit (10) is moved, in order to select and control an object; and
a display screen (20) which displays the object according to the key selection signal or the movement signal generated by the input unit (10).

10. The apparatus of claim 9, wherein the input unit (10) comprises:
a direction key (11) which generates the key selection signal to move the object in a direction corresponding to one of the horizontal direction and the vertical direction and generates the moving signal to move the object in a direction corresponding to one of the first direction and the second direction in which the direction key (11) is moved;
a sliding unit (12) which enables the direction key (11) to be moved in the first direction and the second direction; and
a returning unit (13) which enables the direction key (11) to be returned to an initial position through a repulsive force.

11. The apparatus of claim 9 or 10, wherein if the input unit (10) is moved in the first direction, a movement signal corresponding to movement of the object in a third direction which is normal to a plane formed by a vertical axis and a horizontal axis of the object, is generated, and if the input unit (10) is moved in the second direction, which is opposite to the first direction, a movement signal corresponding to movement of the object in a fourth direction, which is normal to the plane formed by the vertical axis and the horizontal axis of the object and is opposite to the third direction, is generated.

12. The apparatus of claim 9, 10 or 11, wherein a zoom-in key signal is generated if the direction key (11) is moved in the first direction, and a zoom-out key signal is generated if the direction key (11) is moved to the second direction which is opposite in the first direction.
